Europäisches Patentamt

European Patent Office

Office européen des brevets

(19)

(11) Numéro de publication : **0 097 311**
**B1**

(12) **FASCICULE DE BREVET EUROPÉEN**

(45) Date de publication du fascicule du brevet :
30.07.86

(51) Int. Cl.⁴ : **F 02 C   7/228**, F 16 K  11/06

(21) Numéro de dépôt : 83105814.4

(22) Date de dépôt : 14.06.83

(54) **Dispositif de dosage et de répartition d'un gaz sous pression entre n sorties.**

(30) Priorité : 18.06.82 FR 8210642

(43) Date de publication de la demande :
04.01.84 Bulletin 84/01

(45) Mention de la délivrance du brevet :
30.07.86 Bulletin 86/31

(84) Etats contractants désignés :
CH DE FR GB IT LI NL SE

(56) Documents cités :
FR-A- 1 312 239
FR-A- 1 334 374
US-A- 2 637 985
US-A- 2 832 368

(73) Titulaire : ALSTHOM
38, avenue Kléber
F-75784 Paris Cedex 16 (FR)

(72) Inventeur : Bourquin, Robert
23, rue de la Chapelle Valdieu-Lutran
F-68210 Dannemarie (FR)

(74) Mandataire : Weinmiller, Jürgen et al
Zeppelinstrasse 63
D-8000 München 80 (DE)

## Description

La présente invention a trait à un dispositif de dosage et de répartition d'un gaz sous pression entre n sorties comportant un piston qui coulisse à l'intérieur d'un cylindre et qui est relié à un axe qui sert à son positionnement, ledit cylindre comportant un fond muni d'une entrée de gaz et une paroi latérale dans laquelle sont prévues n ouvertures, chacune formant une sortie de gaz, ledit piston en position basse venant interrompre la communication entre entrée et sorties.

Un tel dispositif est décrit dans le document US-A-28 32 368. Le dispositif peut être utilisé pour alimenter n injecteurs. Or lorsque les caractéristiques de chaque direction ne sont pas identiques, brûleurs non appariés, salissement différent etc... la répartition n'est pas exacte.

Le dispositif selon l'invention permettant d'améliorer la répartition d'un gaz est caractérisé en ce que les ouvertures dans la paroi latérale comprennent des fentes qui s'étendent sur une hauteur inférieure à celle du piston et dont la section va en croissant en s'éloignant dudit fond, chaque fente étant reliée dans sa partie éloignée du fond à la sortie de gaz associée et déterminant avec le piston une tuyère convergente-divergente.

L'écoulement au niveau du col de chaque tuyère (c'est-à-dire du pourtour inférieur arrondi du piston) est sonique tout au moins au démarrage et aux faibles débits, si bien que la répartition entre les n sorties est équilibrée, car les débits ne dépendent que de la pression amont unique pour chaque tuyère et de la section au col qui est identique pour chaque tuyère.

De plus le piston ayant une grande course, la précision sera bonne et l'usure faible.

Selon une réalisation préférentielle de l'invention le cylindre est muni d'un couvercle et le piston qui sépare le cylindre en deux chambres est muni d'un ou plusieurs trous mettant en communication les deux chambres, ledit piston étant monté sur un axe traversant d'une façon étanche le couvercle et le fond du cylindre.

Ainsi le piston est équilibré et les variations de pression de gaz n'agissent pas directement sur le piston. De plus, le déplacement du piston n'a aucune influence transitoire sur les débits.

On peut utiliser le dispositif selon l'invention pour une turbine à gaz comportant n chambres de combustion en reliant les sorties du dispositif aux n injecteurs des chambres de combustion.

Le dispositif selon l'invention peut également être utilisé pour l'alimentation des n brûleurs d'une chaudière.

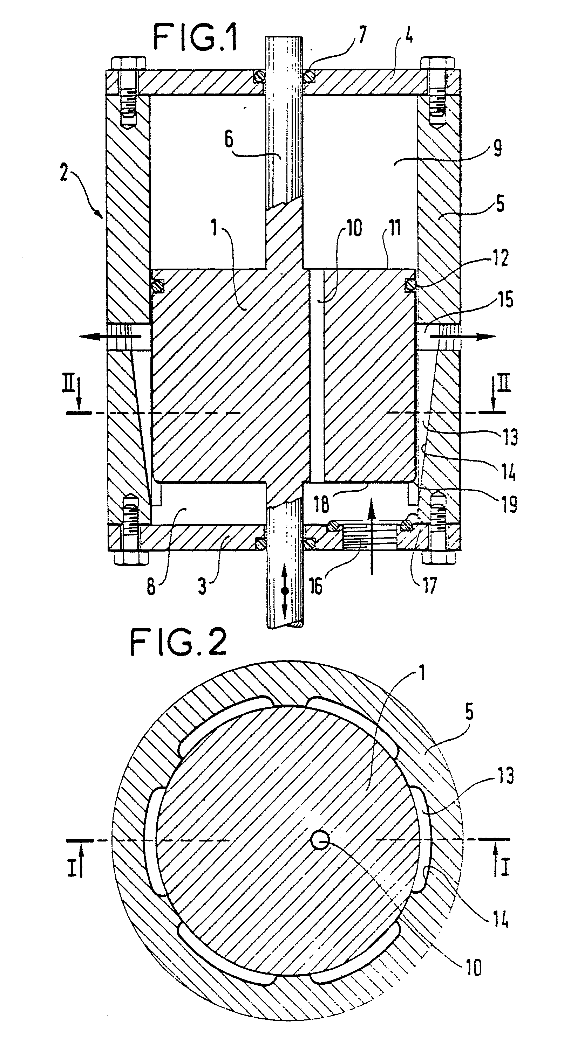

La présente invention sera mieux comprise à la lumière de la description qui va suivre, dans laquelle la figure 1 représente une coupe longitudinale du dispositif de dosage et de répartition selon l'invention selon le plan I-I de la figure 2.

La figure 2 représente une coupe transversale de ce dispositif selon le plan II-II de la figure 1.

Le dispositif comporte un piston 1 mobile à l'intérieur d'un cylindre 2. Ce cylindre 2 comporte un fond 3, un couvercle 4 et une partie latérale 5.

Le piston 1 est relié à un axe vertical 6 traversant le fond 3 et le couvercle 4. Des moyens d'étanchéité 7 sont prévus au niveau de cette traversée.

Le piston 1 divise le cylindre 2 en deux chambres 8, 9 mises en communication par un trou 10 traversant le piston 1.

Le haut 11 du piston 1 est entouré d'un joint d'étanchéité 12. La partie latérale 5 du cylindre 2 est creusée de plusieurs fentes 13 dont le fond 14 s'écarte de la verticale en allant de bas en haut, la largeur des fentes 13 restant constante. De préférence le fond 14 est plat.

La hauteur de la fente 13 est inférieure à la hauteur du piston 1 et dans chaque fente 13 vers sa partie supérieure débouche une sortie 15.

Le fond 3 est muni d'une entrée de gaz sous pression 16 entourée d'un joint d'étanchéité 17.

Lorsque le piston 1 est en position basse, c'est-à-dire que le bas 18 du piston 1 est en contact avec le fond 3, toute communication entre l'entrée 16 et les sorties 15 est interrompue.

Le pourtour 19 de la partie inférieure du piston est arrondi et forme avec chaque fente 13 une tuyère convergente-divergente, lorsque le piston 1 est écarté du fond 3.

Selon l'écartement on admet plus ou moins de gaz dans chaque fente 13.

L'écoulement est sonique au col des tuyères tout au moins au démarrage et aux faibles débits. Aux forts débits il faudra peut-être augmenter la pression du gaz envoyé dans la chambre 8 si l'on veut conserver un écoulement sonique au col.

Le débit intéressant chaque sortie 15 dépend de la pression amont (dans la chambre 8) unique et de la section au col identique pour chaque sortie 15. Il s'ensuit que la répartition entre les sorties sera équilibrée puisqu'elle ne dépend pas des pressions aval qui peuvent être différentes, par exemple, lorsque les sorties 15 sont reliées à des injecteurs dont certains sont encrassés.

Lorsque le fond 14 de chaque fente est plat le débit varie linéairement avec le déplacement du piston.

Grâce au trou 10, les pressions et les forces de part et d'autre du piston 1 sont équilibrées.

Lorsque, par un servo-moteur, on agit sur l'axe 6 pour positionner le piston 1 dans le cylindre, grâce à l'équilibrage des pressions de part et d'autre du piston 1, le déplacement du piston n'a aucune influence transitoire sur les débits.

Grâce au dispositif selon l'invention, on peut répartir d'une façon équilibrée le gaz entré par l'entrée 16 entre les n sorties 15 qui peuvent être, selon les applications, reliées, par exemple, aux injecteurs d'une turbine à gaz ou encore aux brûleurs d'une chaudière.

## Revendications

1. Dispositif de dosage et de répartition d'un gaz sous pression entre n sorties (15), comportant un piston (1) qui coulisse à l'intérieur d'un cylindre (2) et qui est relié à un axe (6) qui sert à son positionnement, ledit cylindre comportant un fond (3) muni d'une entrée (16) de gaz et une paroi latérale (5) dans laquelle sont prévues n ouvertures, chacune formant une sortie de gaz (15), ledit piston (1) en position basse venant interrompre la communication entre entrée (2) et sorties (15), caractérisé en ce que les ouvertures dans la paroi latérale (5) comprennent des fentes (13) qui s'étendent sur une hauteur inférieure à celle du piston (1) et dont la section va en croissant en s'éloignant dudit fond (3), chaque fente (13) étant reliée dans sa partie éloignée du fond (3) à la sortie de gaz (15) associée et déterminant avec le piston (1) une tuyère convergente-divergente.

2. Dispositif selon la revendication 1, caractérisé en ce que le cylindre (2) est muni d'un couvercle (4) et que le piston (1) qui sépare le cylindre (2) en deux chambres (8, 9) est muni d'un ou plusieurs trous (10) mettant en communication les deux chambres (8, 9), ledit piston (1) étant monté sur l'axe (6) traversant d'une façon étanche le couvercle (4) et le fond (3) du cylindre (2).

3. Dispositif selon l'une des revendications précédentes, caractérisé en ce que les sorties de gaz (15) sont reliées aux injecteurs d'une turbine à gaz.

4. Dispositif selon l'une des revendications précédentes, caractérisé en ce que les sorties de gaz (15) sont reliées aux brûleurs d'une chaudière.

## Claims

1. A device for dosing and distributing gas under pressure between n outlets (15), comprising a piston (1) which slides inside a cylinder (2) and which is connected to an axis (6) serving for its positionning, said cylinder comprising a bottom (3) supplied with a gas inlet (16) and a side wall (5) in which n openings are provided, each constituting a gas outlet (15), said piston (1) interrupting in its lower position the communication between inlet (2) and outlets (5), characterized in that the openings in the side wall (5) comprise slots (13) which extend over a height which is smaller than that of the piston (1) and the section of which decreases towards said bottom (3), the portion of each slot (13) which is distanced to the bottom (3) being connected to the associated gas outlet (15) and determining with the piston (1) a convergent-divergent nozzle.

2. A device according to claim 1, characterized in that the cylinder (2) is supplied with a cover (4) and that the piston (1) which divides the cylinder (2) into two chambers (8, 9) is supplied with one or several holes (10) making the two chambers (8, 9) intercommunicate, said piston (1) being mounted on the axis (6) passing in a sealed manner through the cover (4) and the bottom (3) of the cylinder.

3. A device according to one of the preceding claims, characterized in that the gas outlets (15) are connected to the injectors of a gas turbine.

4. A device according to one of the preceding claims, characterized in that the gas outlets (15) are connected to the burners of a boiler.

## Patentansprüche

1. Dosier- und Verteilvorrichtung für ein Druckgas zwischen n Auslässen (15), mit einem Kolben (1), der im Inneren eines Zylinders (2) gleitet und der mit einer Achse (6) verbunden ist, die zu seiner Positionierung dient, wobei der Zylinder einen Boden (3) mit einem Gaseinlaß (16) und eine Seitenwand (5) aufweist, in der n Öffnungen vorgesehen sind, von denen jede einen Gasauslaß (15) bildet, und wobei der Kolben (1) in der unteren Stellung die Verbindung zwischen Einlässen (2) und Auslässen (15) unterbricht, dadurch gekennzeichnet, daß die Öffnungen in der Seitenwand (5) Schlitze (13) aufweisen, die sich über eine Höhe erstrecken, die geringer ist als die des Kolbens (1) und deren Querschnitt zum Boden (3) hin abnimmt, wobei jeder Schlitz (13) in seinem dem Boden (3) abgewandten Teil mit dem entsprechenden Gasauslaß (15) verbunden ist und mit dem Kolben (1) eine konvergierende-divergierende Leitung bildet.

2. Vorrichtung nach Anspruch 1, dadurch gekennzeichnet, daß der Zylinder (2) mit einem Deckel (4) versehen ist und daß der Kolben (1), der den Zylinder (2) in zwei Kammern (8, 9) aufteilt, mit einem oder mehreren Löchern (10) versehen ist, die die beiden Kammern (8, 9) miteinander verbinden, wobei der Kolben (1) auf der Achse (6) montiert ist, die den Deckel (4) und den Boden (3) des Zylinders (2) dicht durchquert.

3. Vorrichtung nach einem der vorhergehenden Ansprüche, dadurch gekennzeichnet, daß die Gasauslässe (15) mit den Injektoren einer Gasturbine verbunden sind.

4. Vorrichtung nach einem der vorhergehenden Ansprüche, dadurch gekennzeichnet, daß die Gasauslässe (15) mit den Brennern einer Brennkammer verbunden sind.

FIG.1

FIG.2